(19) Europäisches Patentamt
European Patent Office
Office européen des brevets

(11) Veröffentlichungsnummer: **0 108 714**
**A1**

(12) **EUROPÄISCHE PATENTANMELDUNG**

(21) Anmeldenummer: 83810463.6

(22) Anmeldetag: 07.10.83

(51) Int. Cl.³: C 07 F 9/24
C 08 K 5/51, C 10 M 1/44

(30) Priorität: 13.10.82 US 434083

(43) Veröffentlichungstag der Anmeldung: 16.05.84 Patentblatt 84/20

(84) Benannte Vertragsstaaten: DE FR GB IT

(71) Anmelder: CIBA-GEIGY AG
Postfach
CH-4002 Basel(CH)

(72) Erfinder: Pastor, Stephen D.
112 Union Road
Spring Valley New York 10977(US)

(72) Erfinder: Spivack, John D.
1 Blue Jay Street
Spring Valley New York 10977(US)

(54) **Dibenzodioxaphosphepin- und -dioxaphosphocin-Verarbeitungsstabilisatoren.**

(57) Sterisch gehinderte Phosphite der Formel

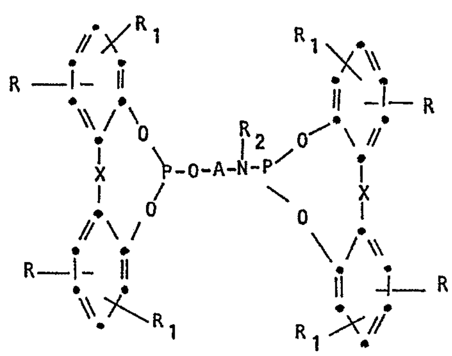

die man durch Umsetzung der entsprechenden Phosphor- und sterisch gehinderten Phenolverbindungen herstellt, sind als Stabilisatoren für organische Polymere und Schmieröle geeignet.

EP 0 108 714 A1

Croydon Printing Company Ltd.

3-14149/=

## Dibenzodioxaphosphepin- und -dioxaphosphocin-Verarbeitungsstabilisatoren

Organische polymere Materialien wie Kunststoffe und Harze sowie Schmieröle und Mineralöle unterliegen thermischem, oxydativem und photoinduziertem Abbau. Zahlreiche Stabilisatoren zur Stabilisierung verschiedener Substrate sind aus dem Stand der Technik bekannt. Deren Wirksamkeit variiert je nach den Ursachen des Abbaus und dem stabilisierten Substrat. Im Verlauf dieser Arbeiten wurde gefunden, dass Stabilisatoren, die über längere Zeiten sehr wirksame Antioxydantien sind, verhältnismässig schlechte Verarbeitungsstabilisatoren sind und das Substrat nicht gegen thermischen Abbau während kurzer Zeit bei verhältnismässig hohen Verarbeitungstemperaturen schützen. Viele Stabilisatoren sind mit den Substraten relativ unverträglich, wodurch während der Lebenszeit eines Produkts Probleme auftreten und die Wirksamkeit des Stabilisators verringert wird. Die Stabilisatoren sind zum Teil entweder zu flüchtig oder thermisch bzw. hydrolytisch zu labil, um als technische Stabilisatoren brauchbar zu sein.

Die Phosphite der vorliegenden Erfindung besitzen eine ungewöhnliche Kombination wünschenswerter Eigenschaften gegenüber den Phosphiten des Standes der Technik, weshalb diese Verbindungen besonders wirksam und nützlich als Stabilisatoren sind.

Phosphite sind in verschiedenen Veröffentlichungen offenbart. Die U.S. Patentschrift Nr. 4 196 117 beschreibt cyclische Biphenylphosphite, worin das Phosphoratom durch O- oder S-Kohlenwasserstoffgruppen oder eine cyclische Kohlenwasserstoffbiphenylphosphitgruppe substituiert ist. Die sowjet-

russischen Patentschriften Nr. 378 389, 429 070 und 440 390 offenbaren die Stabilisierung verschiedener Polymerer mit organischen Phosphiten oder solche Phosphite enthaltenden Gemischen, worin die Phosphite cyclische Methylen-bisphenylphosphite sind. Weitere 1,1'-Biphenyl-2,2'-diyl-phosphite sind aus Chemical Abstracts, 68, 12579s (1968), 73, 15657a (1970) und 75, 130242q (1971) bekannt. Diese verschiedenen Verbindungen werden als Stabilisatoren für unterschiedliche Polymere bezeichnet. Die vorliegenden Verbindungen sind jedoch als Verarbeitungsstabilisatoren, als Farbstabilisatoren sowie bezüglich Hydrolysebeständigkeit bedeutend wirksamer.

Ferner sind Alkanolaminphosphite und die Stabilisierung von Vinyl- und Vinylidenharzen damit in der U.S. Patentschrift Nr. 2 841 607 beschrieben. Weitere Alkanolaminester cyclischer Phosphite sind aus der U.S. Patentschrift 4 318 845 bekannt. Es ist jedoch zu bemerken, dass diese Phosphite des Standes der Technik sich in ihrer Struktur von den vorliegenden Verbindungen unterscheiden.

Dementsprechend besteht die Hauptaufgabe dieser Erfindung darin, cyclische Biphenylphosphitverbindungen zur Verfügung zu stellen, welche eine gegenüber den vorbekannten Phosphitverbindungen verbesserte Leistung bei der Verarbeitungsstabilisierung aufweisen.

Verschiedene weitere Aufgaben und Vorteile dieser Erfindung sind aus deren nachfolgender Beschreibung ersichtlich.

Die erfindungsgemässen Verbindungen entsprechen der Formel

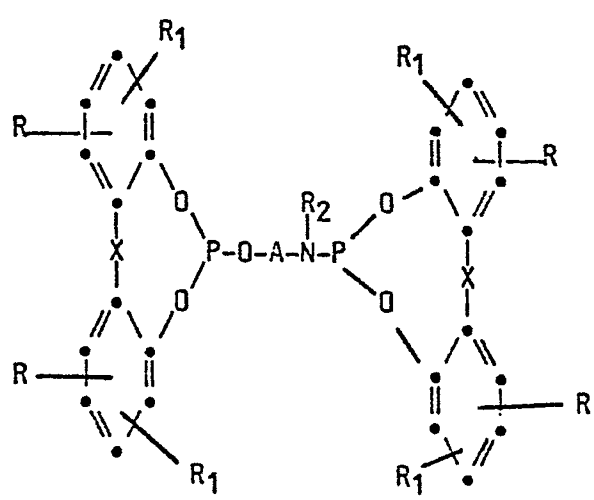

worin R und $R_1$ unabhängig voneinander für Wasserstoff, Alkyl mit 1 bis 18 Kohlenstoffatomen, Cycloalkyl mit 5 oder 6 Kohlenstoffatomen, Phenyl oder substituiertes Phenyl mit 7 bis 24 Kohlenstoffatomen, $R_2$ für Wasserstoff, Alkyl mit 1 bis 12 Kohlenstoffatomen oder Phenyl, A für Alkylen mit 1 bis 6 Kohlenstoffatomen oder Cycloalkylen mit 5 oder 6 Kohlenstoffatomen und X für eine direkte Bindung oder Alkyliden mit 1 bis 12 Kohlenstoffatomen stehen.

Unter den Verbindungen der obigen Struktur werden solche bevorzugt, worin R in den Phenylringen jeweils in ortho-Stellung zum Phosphitsauerstoff steht.

Die Gruppen R und $R_1$ sind vorzugsweise geradkettiges oder verzweigtes Alkyl mit 4 bis 8 Kohlenstoffatomen, wie n-Butyl, sek.-Butyl, tert.-Butyl, tert.-Pentyl, 2-Aethylhexyl, n-Octyl und tert.-Octyl. Besonders bevorzugt werden tert.-Butyl-, tert.-Pentyl- und tert.-Octylgruppen. Ferner befindet sich die Gruppe $R_1$ besonders bevorzugt in der para-Stellung zum Sauerstoff, insbesondere wenn $R_1$ tert.-Alkyl ist.

$R_1$ kann zwar für Wasserstoff oder Alkyl mit 1 bis 18 Kohlenstoffatomen stehen, doch ist es vorzugsweise eine entweder geradkettige oder verzweigte Alkylgruppe mit 1 bis 8 Kohlenstoffatomen. Dabei wird tert.-Alkyl mit 4 bis 8 Kohlenstoffatomen besonders bevorzugt.

Als Substituenten am Phenyl in R und $R_1$ kommen Alkylgruppen mit 1 bis 18 und vorzugsweise 1 bis 8 Kohlenstoffatomen in Betracht.

X ist vorzugsweise Niederalkyliden der Formel

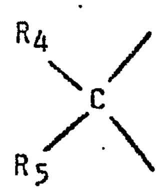

worin $R_4$ und $R_5$ unabhängig voneinander für Wasserstoff oder Alkyl mit 1 bis 7 Kohlenstoffatomen stehen, mit der Massgabe, dass die Anzahl Kohlenstoffatome 12 nicht übersteigt.

Die erfindungsgemässen Phosphite lassen sich dadurch herstellen, dass man ein alkyliertes 2,2'-Biphenol oder ein

alkyliertes 2,2'-Alkyliden-bis-phenol mit Phosphortrichlorid gegebenenfalls in Gegenwart eines Lösungsmittels zum entsprechenden Phosphorochlorodit reagieren lässt, welches seinerseits mit einem Aminoalkoxyd oder Alkanolamin zum erwünschten Produkt umgesetzt wird. Das Lösungsmittel ist vorzugsweise aromatisch, wie Benzol, Toluol, Xylol und dergleichen. Die Reaktionstemperatur liegt im Bereich von Raumtemperatur bis zur Rückflusstemperatur des Reaktionsmediums. Bei der bevorzugten Methode zur Herstellung der erfindungsgemässen Verbindungen handelt es sich um die Umsetzung des Phosphorochlorodits mit einem entsprechenden Alkanolamin in Gegenwart eines Protonenakzeptors wie eines tertiären Amins, z.B. Triäthylamin oder Pyridin.

Die zur Herstellung dieser Phosphite erforderlichen Ausgangsstoffe sind im Handel erhältlich oder nach bekannten Methoden herstellbar.

Die zur Herstellung der Verbindungen eingesetzten Alkanolamine entsprechen der Formel

$$R_2\text{-NH-A-OH}$$

worin $R_2$ und A die oben angegebenen Bedeutungen haben.

Zu bevorzugten Alkanolaminen zählen N-Methyläthanolamin, N-Aethyläthanolamin und N-Butyläthanolamin.

Eine analoge Synthesemethode unter Ersatz der tertiären Amine durch Alkalihydroxyde oder -carbonate im Syntheseschema käme ebenfalls in Frage. Die Reaktionsfolgen können so durchgeführt werden, dass man die erfindungsgemässen Verbindungen ohne Isolierung des Chloroditzwischenprodukts erhält.

Die erfindungsgemässen Verbindungen sind bei der Stabilisierung organischer Materialien wie Kunststoffen, Polymeren und Harzen sowie Mineral- und Syntheseflüssigkeiten wie Schmierölen, Umlaufölen und dergleichen wirksam.

Die erfindungsgemässen Verbindungen sind besonders nützlich als Stabilisatoren, speziell zum Schutz von Polyolefinen, beispielsweise Polyäthylen, Polypropylen, Polyisobutylen, Poly-(buten-1), Poly-(penten-1), Poly-(3-methylbuten-1), Poly-(4-methyl-penten-1), verschiedenen Aethylen/Propylencopolymeren und dergleichen.

Zu weiteren Substraten, bei denen die erfindungsgemässen Verbindungen besonders nützlich sind, zählen Polystyrol, einschliesslich schlagzähem Polystyrol, ABS-Harz, SBR, Isopren sowie Naturkautschuk, Polyester wie Polyäthylenterephthalat und Polybutylenterephthalat sowie Copolymere.

Polyurethane, Polycarbonate, Polyamide wie Nylon-6, -6/6 und dergleichen sowie Copolyamide und Polysulfone werden ebenfalls stabilisiert.

Die stabilisierbaren Polymeren schliessen allgemein die folgenden ein:

1. Polymere von Monoolefinen und Diolefinen, beispielsweise Polyäthylen (gegebenenfalls vernetzt), Polypropylen, Polyisobutylen, Polybuten-1, Polymethylpenten-1, Polyisopren oder Polybutadien sowie Polymere von Cycloolefinen, z.B. Cyclopenten oder Norbornen.

2. Gemische der unter 1) genannten Polymeren, beispielsweise Gemische von Polypropylen mit Polyäthylen oder Polyisobutylen.

3. Copolymere von Monoolefinen und Diolefinen miteinander oder mit anderen Vinylmonomeren, wie beispielsweise Aethylen/Propylen, Propylen/Buten-1, Propylen/Isobutylen, Aethylen/Buten-1, Propylen/Butadien, Isobutylen/Isopren, Aethylen/Aethylacrylat, Aethylen/Alkylmethacrylate, Aethylen/Vinylacetat oder Aethylen/Acrylsäurecopolymere und deren Salze (Ionomere) sowie Terpolymere von Aethylen mit Propylen und einem Dien wie Hexadien, Dicyclopentadien oder Aethylidennorbornen.

4. Polystyrol.

5. Statistische Copolymere des Styrols oder α-Methylstyrols mit Dienen oder Acrylderivaten, wie beispielsweise Styrol/Butadien, Styrol/Acrylnitril, Styrol/Alkylmethacrylate, Styrol/Acrylnitril/Methylacrylat, hochschlagzähe Gemische aus Styrolcopolymeren und einem weiteren Polymeren wie beispielsweise einem Polyacrylat, einem Dienpolymeren oder einem Aethylen/Propylen/Dienterpolymeren, sowie Blockcopolymere des Styrols, wie beispielsweise Styrol/Butadien/Styrol, Styrol/Isopren/Styrol, Styrol/Aethylen/Butylen/Styrol oder Styrol/Aethylen/Propylen/Styrol.

6. Pfropfcopolymere des Styrols, wie beispielsweise Styrol auf Polybutadien, Styrol und Acrylnitril auf Polybutadien, Styrol und Alkylacrylate oder -methacrylate auf Polybutadien, Styrol und Acrylnitril auf Aethylen/Propylen/Dienterpolymeren, Styrol und Acrylnitril auf Polyacrylaten oder Polymethacrylaten, Styrol und Acrylnitril auf Acrylat/Butadiencopolymeren sowie deren Gemische mit den unter 5) angeführten Copolymeren, beispielsweise die als ABS-, MBS-, ASA- oder AES-Polymere bekannten Copolymergemische.

7. Halogenhaltige Polymere, wie Polychloropren, chlorierter Kautschuk, chloriertes oder sulfochloriertes Polyäthylen, Polymere aus halogenhaltigen Vinylverbindungen, wie beispielsweise Polyvinylchlorid, Polyvinylidenchlorid, Polyvinylfluorid, Polyvinylidenfluorid sowie deren Copolymere, wie beispielsweise Vinylchlorid/Vinylidenchlorid-, Vinylchlorid/Vinylacetat- oder Vinylidenchlorid/Vinylacetatcopolymere.

8. Von $\alpha,\beta$-ungesättigten Säuren und deren Derivaten abgeleitete Polymere, wie Polyacrylate und Polymethacrylate, Polyacrylamide und Polyacrylnitril.

9. Copolymere aus den unter 8) angeführten Monomeren miteinander oder mit anderen ungesättigten Monomeren, wie beispielsweise Acrylnitril/Butadien-, Acrylnitril/Alkylacrylat- oder Acrylnitril/Vinylchloridcopolymere oder Acrylnitril/Alkylmethacrylat/Butadienterpolymere.

10. Von ungesättigten Alkoholen und Aminen abgeleitete Polymere oder deren Acylderivate oder Acetale, wie Polyvinylalkohol, Polyvinylacetat, Polyvinylstearat, Polyvinylbenzoat, Polyvinylmaleinat, Polyvinylbutyral, Polyallylphthalat oder Polyallylmelamin.

11. Homopolymere und Copolymere cyclischer Aether, wie Polyalkylenglykole, Polyäthylenoxyd, Polypropylenoxyd oder deren Copolymere mit Bisglycidyläthern.

12. Polyacetale, wie Polyoxymethylen sowie Aethylenoxyd als Comonomer enthaltende Polyoxymethylene.

13. Polyphenylenoxyde und -sulfide.

14. Von Polyäthern, Polyestern oder Polybutadienen abgeleitete Polyurethane mit Hydroxylendgruppen auf einer Seite und aliphatischen oder aromatischen Polyisocyanaten auf der anderen Seite, sowie deren Vorstufen.

15. Von Diaminen und Dicarbonsäuren und/oder Aminocarbonsäuren bzw. den entsprechenden Lactamen abgeleitete Polyamide und Copolyamide, wie Polyamid-4, Polyamid-6, Polyamid-6/6, Polyamid-6/10, Polyamid-11, Polyamid-12, Poly-2,4,4-trimethylhexamethylenterephthalamid oder Poly-m-phenylenisophthalamid sowie deren Copolymere mit Polyäthern wie beispielsweise Polyäthylenglykol, Polypropylenglykol oder Polytetramethylenglykolen.

16. Polyharnstoffe, Polyimide und Polyamid-imide.

17. Von Dicarbonsäuren und Dialkoholen und/oder Hydroxycarbonsäuren oder den entsprechenden Lactonen abgeleitete Polyester, wie Polyäthylenterephthalat, Polybutylenterephthalat, Poly-1,4-dimethylolcyclohexanterephthalat und Polyhydroxybenzoate sowie von Polyäthern mit Hydroxylendgruppen abgeleitete Copolyäther-ester.

18. Polycarbonate.

19. Polysulfone und Polyäthersulfone.

20. Von Aldehyden einerseits und Phenolen, Harnstoffen und Melaminen andererseits abgeleitete vernetzte Polymere, wie Phenol/Formaldehydharze, Harnstoff/Formaldehydharze und Melamin/Formaldehydharze.

21. Trocknende und nichttrocknende Alkydharze.

22. Von Copolyestern gesättigter und ungesättigter Dicarbonsäuren mit mehrwertigen Alkoholen und Vinylverbindungen als Vernetzungsmittel abgeleitete ungesättigte Polyesterharze, einschliesslich deren halogenhaltigen, schwer entflammbaren Modifikationen.

23. Von substituierten Acrylestern abgeleitete duroplastische Acrylharze, wie Epoxy-acrylate, Urethan-acrylate oder Polyester-acrylate.

24. Alkydharze, Polyesterharze oder Acrylatharze im Gemisch mit Melaminharzen, Harnstoffharzen, Polyisocyanaten oder Epoxidharzen als Vernetzungsmittel.

25. Von Polyepoxiden, z.B. Bis-glycidyläthern oder cycloaliphatischen Diepoxiden und aromatischen Diepoxiden abgeleitete, vernetzte Epoxidharze.

26. Natürliche Polymere, wie Cellulose, Kautschuk, Gelatine und deren chemisch polymer-homolog modifizierte Derivate, wie Celluloseacetate, Cellulosepropionate und Cellulosebutyrate bzw. Celluloseäther wie Methylcellulose.

27. Natürlich vorkommende und synthetische organische Materialien, die reine monomere Verbindungen oder Gemische solcher Verbindungen darstellen, beispielsweise Mineralöle, tierische und pflanzliche Fette, Oele und Wachse, oder Oele, Fette und Wachse auf Grundlage synthetischer Ester (z.B. Phthalate, Adipate, Phosphate oder Trimellithate) sowie Gemische synthetischer Ester mit Mineralölen in beliebigem Gewichtsverhältnis, wobei diese Materialien als Weichmacher für Polymere oder als Textilspinnöle verwendbar sind, sowie wässrige Emulsionen solcher Materialien.

28. Wässrige Emulsionen von Natur- oder Synthesekautschuk, z.B. natürlicher Latex oder Latices carboxylierter Styrol/Butadiencopolymerer.

Im allgemeinen werden die erfindungsgemässen Stabilisatoren zu etwa 0,01 bis etwa 5 Gew.-% der stabilisierten Zusammensetzung angewandt, doch variiert dies mit dem jeweiligen Substrat und der jeweiligen Anwendung. Ein bevorzugter Bereich liegt zwischen etwa 0,05 und etwa 2% und insbesondere 0,1 bis etwa 1%.

Die erfindungsgemässen Stabilisatoren lassen sich nach herkömmlichen Methoden in jeder beliebigen Stufe vor der Herstellung von Formkörpern daraus leicht in die organischen Polymeren einarbeiten. Beispielsweise kann man den Stabilisator mit dem Polymer in trockener Pulverform oder eine Suspension oder Emulsion des Stabilisators mit einer Lösung, Suspension oder Emulsion des Polymeren vermischen. Gegebenenfalls können die erfindungsgemässen stabilisierten Polymerzusammensetzungen auch verschiedene herkömmliche Zusatzstoffe wie die folgenden enthalten:

1. Antioxydantien

1.1 Einfache 2,6-Dialkylphenole wie beispielsweise 2,6-Di-tert.-butyl-4-methylphenol, 2-tert.-Butyl-4,6-dimethylphenol, 2,6-Di-tert.-butyl-4-methoxymethylphenol und 2,6-Di-octadecyl-4-methylphenol.

1.2. Derivate alkylierter Hydrochinone wie beispielsweise 2,5-Di-tert.-butylhydrochinon, 2,5-Di-tert.-amylhydrochinon, 2,6-Di-tert.-butylhydrochinon, 2,6-Di-tert.-butyl-4-hydroxyanisol, 3,5-Di-tert.-butyl-4-hydroxyanisol, Tris-(3,5-di-tert.-butyl-4-hydroxyphenyl)-phosphit, 3,5-Di-tert.-butyl-4-hydroxyphenylstearat und Bis-(3,5-di-tert.-butyl-4-hydroxy-phenyl)-adipat.

1.3. Hydroxylierte Thiodiphenyläther wie beispielsweise 2,2'-Thio-bis-(6-tert.-butyl-4-methylphenol), 2,2'-Thio-bis-(4-octylphenol), 4,4'-Thio-bis-(6-tert.-butyl-3-methylphenol), 4,4'-Thio-bis-(3,6-di-sek.-amylphenol), 4,4'-Thio-bis-(6-tert.-butyl-2-methylphenol) und 4,4'-Bis-(2,6-dimethyl-4-hydroxyphenyl)-disulfid.

1.4. Alkylidenbisphenole wie beispielsweise 2,2'-Methylen-bis-(6-tert.-butyl-4-methylphenol), 2,2'-Methylen-bis-(6-tert.-butyl-4-äthylphenol), 4,4'-Methylen-bis-(6-tert.-butyl-2-methylphenol), 4,4'-Methylen-bis-(2,6-di-tert.-butylphenol), 2,6-Di-(3-tert.-butyl-5-methyl-2-hydroxybenzyl)-4-methylphenol, 2,2'-Methylen-bis-[4-methyl-6-(α-methylcyclohexyl)-phenol], 1,1-Bis-(3,5-dimethyl-2-hydroxyphenyl)-butan, 1,1-Bis-(5-tert.-butyl-4-hydroxy-2-methylphenyl)-butan, 2,2-Bis-(3,5-di-tert.-butyl-4-hydroxyphenyl)-propan, 1,1,3-Tris-(5-tert.-butyl-4-hydroxy-2-methylphenyl)-butan, 2,2-Bis-(5-tert.-butyl-4-hydroxy-2-methylphenyl)-4-n-dodecylmercaptobutan, 1,1,5,5-Tetra-(5-tert.-butyl-4-hydroxy-2-methylphenyl)-pentan und Aethylenglykol-bis-[3,3-bis-(3'-tert.-butyl-4'-hydroxyphenyl)-butyrat].

1.5. O-, N- und S-Benzylverbindungen wie beispielsweise 3,3',5,5'-Tetra-tert.-butyl-4,4'-dihydroxydibenzyläther, Octadecyl-4-hydroxy-3,5-dimethylbenzyl-mercaptoacetat, Tris-(3,5-di-tert.-butyl-4-hydroxybenzyl)-amin und Bis-(4-tert.-butyl-3-hydroxy-2,6-dimethylbenzyl)-dithioterephthalat.

1.6. Hydroxybenzylierte Malonate wie beispielsweise Diocta-

decyl-2,2-bis-(3,5-di-tert.-butyl-2-hydroxybenzyl)-malonat, Dioctadecyl-2-(3-tert.-butyl-4-hydroxy-5-methylbenzyl)-malonat, Di-dodecylmercaptoäthyl-2,2-bis-(3,5-di-tert.-butyl-4-hydroxybenzyl)-malonat und Di-[4-(1,1,3,3-tetramethylbutyl)-phenyl]-2,2-bis-(3,5-di-tert.-butyl-4-hydroxybenzyl)-malonat.

1.7. Hydroxybenzylierte aromatische Verbindungen wie beispielsweise 1,3,5-Tris-(3,5-di-tert.-butyl-4-hydroxybenzyl)-2,4,6-trimethylbenzol, 1,4-Bis-(3,5-di-tert.-butyl-4-hydroxybenzyl)-2,3,5,6-tetramethylbenzol und 2,4,6-Tri-(3,5-di-tert.-butyl-4-hydroxybenzyl)-phenol.

1.8. s-Triazinverbindungen wie beispielsweise 2,4-Bis-octylmercapto-6-(3,5-di-tert.-butyl-4-hydroxyanilino)-s-triazin, 2-Octylmercapto-4,6-bis-(3,5-di-tert.-butyl-4-hydroxyanilino)-s-triazin, 2-Octylmercapto-4,6-bis-(3,5-di-tert.-butyl-4-hydroxyphenoxy)-s-triazin, 2,4,6-Tris-(3,5-di-tert.-butyl-4-hydroxyphenoxy)-s-triazin, 2,4,6-Tris-(3,5-di-tert.-butyl-4-hydroxyphenyläthyl)-s-triazin und 1,3,5-Tris-(3,5-di-tert.-butyl-4-hydroxybenzyl)-isocyanurat.

1.9. Amide der β-(3,5-Di-tert.-butyl-4-hydroxyphenyl)-propionsäure wie beispielsweise 1,3,5-Tris-3,5-di-tert.-butyl-4-hydroxyphenylpropionyl)-hexahydro-s-triazin und N,N'-Di-(3,5-di-tert.-butyl-4-hydroxyphenylpropionyl)-hexamethylendiamin und N,N'-Bis- -(3,5-di-tert.-butyl-4-hydroxyphenylpropionyl)-hydrazin.

1.10. Ester der β-(3,5-Di-tert.-butyl-4-hydroxyphenyl)-propionsäure mit einwertigen oder mehrwertigen Alkoholen wie beispielsweise Methanol, Aethanol, Octadecanol, 1,6-Hexandiol, 1,9-Nonandiol, Aethylenglykol, 1,2-Propandiol, Diäthylenglykol, Triäthylenglykol, Thiodiäthylenglykol, Neopentylglykol, Pentaerythrit, 3-Thia-undecanol, 3-Thia-pentadecanol, Trimethylhexandiol, Trimethyloläthan, Trimethylolpropan, Tris-hydroxyäthyl-isocyanurat und 4-Hydroxymethyl-1-phospha-2,6,7-trioxabicyclo[2,2,2]octan.

1.11. Ester der β-(5-tert.-Butyl-4-hydroxy-3-methylphenyl)-propionsäure mit einwertigen oder mehrwertigen Alkoholen wie beispielsweise Methanol, Aethanol, Octadecanol, 1,6-Hexandiol, 1,9-Nonandiol, Aethylenglykol, 1,2-Propandiol, Diäthylenglykol, Triäthylenglykol, Thiodiäthylenglykol, Neopentylglykol, Pentaerythrit, 3-Thia-undecanol, 3-Thia-pentadecanol, Trimethylhexandiol, Trimethylolätnan, Trimethylolpropan, Tris-hydroxyäthyl-isocyanurat und 4-Hydroxymethyl-1-phospha-2,6,7-trioxabicyclo[2,2,2]octan.

1.12. Ester der 3,5-Di-tert.-butyl-4-hydroxyphenylessigsäure mit einwertigen oder mehrwertigen Alkoholen wie beispielsweise Methanol, Aethanol, Octadecanol, 1,6-Hexandiol, 1,9-Nonandiol, Aethylenglykol, 1,2-Propandiol, Diäthylenglykol, Thiodiglykol, Neopentylglykol, Pentaerythrit, 3-Thia-undecanol, 3-Thia-pentadecanol, Trimethylhexandiol, Trimethyloläthan, Trimethylolpropan, Tris-hydroxyäthyl-isocyanurat und 4-Hydroxymethyl-1-phospha-2,6,7-trioxabicyclo[2,2,2]octan, insbesondere der Tetra-bis-ester des Pentaerythrits.

1.13. Benzylphosphonate wie beispielsweise Dimethyl-3,5-di-tert.-butyl-4-hydroxybenzyl-phosphonat, Diäthyl-3,5-di-tert.-butyl-4-hydroxybenzyl-phosphonat, Dioctadecyl-3,5-di-tert.-butyl-4-hydroxybenzyl-phosphonat und Dioctadecyl-5-tert.-butyl-4-hydroxy-3-methylbenzyl-phosphonat.

Die folgenden seien als Beispiele für weitere Zusatzstoffe genannt, die zusammen mit dem erfindungsgemässen Stabilisator und dem Antioxydans verwendet werden können:

1. Aminoarylderivate, z.B. Phenyl-1-naphthylamin, Phenyl-2-naphthylamin, N,N'-Diphenyl-p-phenylendiamin, N,N'-Di-2-naphthyl-p-phenylendiamin, N,N'-Di-naphthyl-p-phenylendiamin, N,N'-Di-sek.-butyl-p-phenylendiamin, 6-Aethoxy-2,2,4-trimethyl-1,2-dihydrochinolin, 6-Dodecyl-2,2,4-trimethyl-1,2-dihydrochinolin, Mono- und Dioctyliminodibenzyl, polymerisiertes 2,2,4-Trimethyl-1,2-dihydrochinolin, octyliertes Diphenylamin, nonyliertes Diphenylamin, N-Phenyl-N'-cyclohexyl-p-phenylendiamin, N-Phenyl-N'-isopropyl-p-phenylendiamin, N,N'-Di-sek.-octyl-p-phenylendiamin, N-Phenyl-N'-sek.-octyl-p-phenylendiamin, N,N'-Di-(1,4-dimethylpentyl)-p-phenylendiamin, N,N'-Dimethyl-N,N'-di-(sek.-octyl)-p-phenylendiamin, 2,6-Dimethyl-4-methoxyanilin, 4-Aethoxy-N-sek.-butylanilin, das Diphenylamin/Acetonkondensationsprodukt, Aldol-1-naphthylamin und Phenothiazin.

Bei Verwendung der obigen Antioxydantien sind Verfärbungseffekte zu berücksichtigen.

2. UV-Absorber und Lichtschutzmittel

2.1. 2-(2'-Hydroxyphenyl)-benztriazole, beispielsweise die 5'-Methyl-, 3',5'-Di-tert.-butyl-, 5'-tert.-Butyl-, 5'-(1,1,3,3-Tetramethylbutyl)-, 5-Chlor-3',5'-di-tert.-butyl-, 5-Chlor-3'-tert.-butyl-5'-methyl-, 3'-sek.-Butyl-5'-tert.-butyl-, 3'-α-Methylbenzyl-5'-methyl-, 3'-α-Methylbenzyl-5'-methyl-5-chlor-, 4'-Hydroxy-, 4'-Methoxy-, 4'-Octoxy-, 3',5'-Di-tert.-amyl-, 3'-Methyl-5'-carbomethoxyäthyl-, 3',5'-Bis-(α,α-dimethylbenzyl)-, 3',5'-Bis-(α,α-dimethyl-benzyl)-5-chlor-, 3',5'-Di-tert.-octylphenyl-, 3',5'-Di-tert.-octylphenyl-5-chlor- und 5-Chlor-3',5'-di-tert.-amyl-derivate.

2.2. 2,4-Bis-(2'-hydroxyphenyl)-6-alkyl-s-triazine, beispielsweise das 6-Aethyl-, 6-Heptadecyl- oder 6-Undecylderivat.

2.3. 2-Hydroxybenzophenone, beispielsweise das 4-Hydroxy-, 4-Methoxy-, 4-Octoxy-, 4-Decyloxy-, 4-Dodecyloxy-, 4-Benzyloxy-, 2',4,4'-Trihydroxy- oder 2'-Hydroxy-4,4'-dimethoxyderivat.

2.4. 1,3-Bis-(2'-hydroxybenzoyl)-benzole, beispielsweise 1,3-Bis-(2'-hydroxy-4'-hexyloxy-benzoyl)-benzol, 1,3-Bis-(2'-hydroxy-4'-octyloxy-benzoyl)-benzol oder 1,3-Bis-(2'-hydroxy-4'-dodecyloxy-benzoyl)-benzol.

2.5. Ester gegebenenfalls substituierter Benzoesäuren, beispielsweise Phenylsalicylat, Octylphenylsalicylat, Dibenzoylresorcin, Bis-(4-tert.-butylbenzoyl)-resorcin, Benzoylresorcin, 3,5-Di-tert.-butyl-4-hydroxybenzoesäure-2,4-di-tert.-butylphenylester oder -octadecylester oder -2-methyl-4,6-di-tert.-butylester.

2.6. Acrylate, beispielsweise α-Cyan-β,β-diphenylacrylsäure-äthylester oder -isooctylester, α-Carbomethoxyzimtsäuremethylester, α-Cyan-β-methyl-p-methoxyzimtsäuremethylester oder -butylester oder N-(β-Carbomethoxyvinyl)-2-methylindolin.

2.7. Sterisch gehinderte Amine, beispielsweise 4-Benzoyl-2,2,6,6-tetramethylpiperidin, 4-Stearyloxy-2,2,6,6-tetramethylpiperidin, Bis-(2,2,6,6-tetramethyl-piperidyl)-sebacinat

oder 3-n-Octyl-7,7,9,9-tetramethyl-1,3,8-triaza-spiro[4,5]-decan-2,4-dion.

2.8. Oxalsäurediamide, beispielsweise 4,4'-Dioctyloxy-oxanilid, 2,2'-Didodecyloxy-5,5'-di-tert.-butyl-oxanilid, 2-Aethoxy-2'-äthyl-oxanilid, N,N'-Bis-(3-dimethylaminopropyl)-oxalamid, 2-Aethoxy-5-tert.-butyl-2'-äthyl-5,4'-di-tert.-butyl-oxanilid oder Gemische von ortho- und para-methoxy- bzw. o- und p-äthoxydisubstituierten Oxaniliden.

3. Metalldesaktivatoren, beispielsweise Oxanilid, Isophthalsäure-dihydrazid, Sebacinsäure-bis-phenylhydrazid, Bis-benzylidenoxalsäuredihydrazid, N,N'-Diacetyladipinsäuredihydrazid, N,N'-Bis-salicyloyl-oxalsäuredihydrazid, N,N'-Bis-salicyloyl-hydrazin, N,N'-Bis-(3,5-di-tert.-butyl-4-hydroxyphenylpropionyl)-hydrazin, N-Salicyloyl-N'-salicylalhydrazin, 3-Salicyloyl-amino-1,2,4-triazol oder N,N'-Bis-salicyloyl-thiopropionsäuredihydrazid.

4. Basische Costabilisatoren, beispielsweise Alkali- und Erdalkalisalze höherer Fettsäuren, z.B. Ca-Stearat, Zn-Stearat, Mg-Behenat, Na-Ricinoleat oder K-Palmitat.

5. Nukleierungsmittel, beispielsweise 4-tert.-Butylbenzoesäure, Adipinsäure oder Diphenylessigsäure.

6. Phosphite, wie beispielsweise Triphenylphosphit, Diphenylalkylphosphite, Phenyldialkylphosphite, Tri-(nonylphenyl)-phosphit, Trilaurylphosphit, Trioctadecylphosphit, 3,9-Isodecyloxy-2,4,8,10-tetraoxa-3,9-diphosphaspiro[5,5]undecan und Tri-(4-hydroxy-3,5-di-tert.-butylphenyl)-phosphit.

Weitere Zusatzstoffe, die in die stabilisierten Zusammensetzungen mit eingearbeitet werden können, sind Thiosynergisten wie Dilaurylthiodipropionat oder Distearylthiodipropionat, Schmiermittel wie Stearylalkohol, Füllstoffe, Russ, Asbest, Kaolin, Talkum, Glasfasern, Pigmente, optische Aufheller, Flammschutzmittel und Antistatika.

Die erfindungsgemässen Verbindungen können für sich als einziger Stabilisator entweder mit hauptsächlich einer Antioxydansfunktion oder einer Lichtschutzmittelfunktion eingesetzt werden, oder der Stabilisator kann die Wirkung als Antioxydans und als Lichtschutzmittel in sich vereinigen.

Die Stabilisatoren lassen sich zusammen mit phenolischen Antioxydantien, Schmiermitteln wie Calciumstearat, Pigmenten, Farbmitteln oder Farbstoffen, UV-Absorbern, Lichtschutzmitteln wie sterisch gehinderten Aminen, Metalldesaktivatoren, Talkum und sonstigen Füllstoffen und dergleichen verwenden.

Die vorliegenden Verbindungen lassen sich zwar zweckmässig als Stabilisatoren für verschiedene Substrate sowohl für sich als auch in Verbindung mit weiteren Zusatzstoffen verwenden, doch ergibt die Kombination der vorliegenden Verbindungen mit ausgewählten sterisch gehinderten phenolischen Antioxydantien einen erhöhten Schutz solcher Substrate. Dabei haben sich aus der folgenden Gruppe ausgewählte phenolische Antioxydantien als besonders geeignet erwiesen: 2,6-Di-tert.-butyl-4-methylphenol, 4,4'-Thio-bis-(6-tert.-butyl-3-methylphenol), 2,2'-Methylen-bis-(6-tert.-butyl-3-methylphenol), 4,4'-Methylen-bis-(2,6-di-tert.-butylphenol), 1,1,3-Tris-(5-tert.-butyl-4-hydroxy-2-methylphenyl)-butan, 1,3,5-Tris-(3,5-di-tert.-butyl-4-hydroxybenzyl)-2,4,6-trimethylbenzol, 2-Octylthio-4,6-bis-(3,5-di-tert.-butyl-4-hydroxyanilino)-s-triazin, n-Octadecyl-3,5-di-tert.-butyl-4-hydroxyhydrocinnamat, Neopentantetrayl-tetrakis-(3,5-di-tert.-butyl-4-hydroxyhydrocinnamat), 1,3,5-Tris-(3,5-di-tert.-butyl-4-hydroxybenzyl)-isocyanurat, Thiodiäthylen-bis-(3,5-di-tert.-butyl-4-hydroxyhydrocinnamat), der Tris-(2-hydroxyäthyl)-isocyanuratester der β-(3,5-Di-tert.-butyl-4-hydroxyphenyl)-propionsäure, 6,6'-Aethyliden-bis-(2,4-di-tert.-butylphenol), 6,6'-Methylen-bis-(2,4-di-tert.-butylphenol) und 1,3,5-Tris-(4-tert.-butyl-3-hydroxy-2,6-dimethylbenzyl)-isocyanurat.

Die Zusammensetzungen bestehen aus (a) einem Substrat, vorzugsweise einem Polyolefin wie Polypropylen, (b) etwa 0,01 bis etwa 5 Gew.-% der Zusammensetzung, vorzugsweise etwa 0,025 bis etwa 2% und besonders bevorzugt 0,025 bis 1%, einer vorliegenden Verbindung oder einem Gemisch solcher sowie gegebenenfalls (c) einem phenolischen Antioxydans oder einem Gemisch solcher aus der eben erwähnten Gruppe ausgewählter Antioxydantien, ebenfalls im Bereich von 0,01 bis 5% und vorzugsweise 0,05 bis 1 Gew.-% der Zusammensetzung.

Ebenso sind die folgenden Lichtschutzmittel zur Anwendung, entweder für sich oder zusammen mit den angeführten phenolischen Antioxydantien, als Zusatzstoffe zur Einarbeitung mit den vorliegenden Stabilisatoren in die genannten Substrate bevorzugt: 2-(2'-Hydroxy-5'-methylphenyl)-benztriazol, 2-(3',5'-Di-tert.-butyl-2'-hydroxyphenyl)-benztriazol, 2-(2'-Hydroxy-3',5'-di-tert.-amylphenyl)-benztriazol, Nickel-bis-[O-äthyl-(3,5-di-tert.-butyl-4-hydroxybenzyl)-phosphonat], Bis-(1,2,2,6,6-Pentamethyl-4-piperidyl)-2-n-butyl-2-(3,5-di-tert.-butyl-4-hydroxybenzyl)-malonat, Bis-(2,2,6,6-tetramethyl-4-piperidyl)-sebacinat, das Bernsteinsäuredimethylesterpolymer mit 4-Hydroxy-2,2,6,6-tetramethyl-1-piperidinäthanol und das Polymer des 2,4-Dichlor-6-octylamino-s-triazins mit N'-(2,2,6,6-Tetramethyl-4-piperidyl)-hexamethylendiamin.

Die nachfolgenden Beispiele dienen der näheren Erläuterung von Ausführungsbeispielen dieser Erfindung. Dabei sind Teile stets Gewichtsteile, falls nicht anders angegeben.

## Beispiel 1

N-(2,4,8,10-Tetra-tert.-butyl-dibenzo[d,f][1,3,2]dioxaphosphepin-6-yl)-2'-(2,4,8,10-tetra-tert.-butyl-dibenzo[d,f]-[1,3,2]dioxaphosphepin-6-oxy)-N-methyläthylamin

Man beschickt einen mit einer Flamme getrockneten Kolben unter Stickstoff mit 26,7 g Phosphortrichlorid in 100 ml trockenem Toluol und danach mit einer Lösung von 8,0 g 3,3',5,5'-Tetra-tert.-butylbiphenyl-2,2'-diol und 38,5 g Triäthylamin in 200 ml trockenem Toluol bei einer 15°C nicht übersteigenden Temperatur. Man rührt bei Raumtemperatur bis zum Verschwinden der Hydroxylabsorption im IR-Spektrum. Dann gibt man eine Lösung von 7,3 g N-Methyläthanolamin und 19,3 g Triäthylamin dazu. Man erhitzt auf 50°C, bis die Umsetzung laut Dünnschichtchromatographie vollständig ist. Das Gemisch wird filtriert, am Rotationsverdampfer eingedampft und aus 2-Butanon umkristallisiert, was 50,3 g (54%) weisses Pulver vom Schmelzpunkt 233-237°C ergibt.

Analyse:

Berechnet für $C_{59}H_{87}NO_5P_2$: C, 74,4; H, 9,2; N, 1,5.

Gefunden: C, 74,3; H, 9,1; N, 1,5.

Beispiel 2

N-(2,4,8,10-Tetra-tert.-butyl-dibenzo[d,f][1,3,2]dioxaphosphepin-6-yl)-2'-(2,4,8,10-tetra-tert.-butyl-dibenzo[d,f]-[1,3,2]dioxaphosphepin-6-oxy)-N-äthyläthylamin

Man verfährt wie in Beispiel 1 unter Verwendung von 26,7 g Phosphortrichlorid, 57,8 g Triäthylamin, 80,0 g 3,3',5,5'-Tetra-tert.-butylbiphenyl-2,2'-diol und 8,7 g N-Aethyläthanolamin.

Beim Umkristallisieren des Reaktionsprodukts aus 2-Butanon erhält man 46,8 g (50%) weisses Pulver vom Schmelzpunkt 238-242°C.

Analyse:

Berechnet für $C_{60}H_{89}NO_5P_2$: C, 74,6; H, 9,2; N, 1,4.

Gefunden: C, 74,6; H, 8,8; N, 1,5.

Beispiel 3

N-(2,4,8,10-Tetra-tert.-butyl-dibenzo[d,f][1,3,2]dioxaphosphepin-6-yl)-2'-(2,4,8,10-tetra-tert.-butyl-dibenzo[d,f]-[1,3,2]dioxaphosphepin-6-yl-6-oxy)-N-butyläthylamin

Man verfährt wie in Beispiel 1, unter Verwendung von 26,7 g Phosphortrichlorid, 80,0 g 3,3',5,5'-Tetra-tert.-butylbiphenyl-2,2'-diol, 57,8 g Triäthylamin und 11,4 g N-Butyläthanolamin.

Das Reaktionsprodukt wird je einmal aus 2-Propanol und 2-Propanon umkristallisiert, was 23,7 g (24%) weisse Kristalle vom Schmelzpunkt 215-221°C liefert.

Analyse:

Berechnet für $C_{62}H_{93}NO_5P_2$: C, 74,9; H, 9,4; N, 1,4.

Gefunden: C, 74,9; H, 9,2; N, 1,4.

Beispiel 4

N-(2,4,8,10-Tetra-tert.-butyl-12H-dibenzo[d,g][1,3,2]dioxaphosphocin-6-yl)-2'-(2,4,8,10-tetra-tert.-butyl-12H-dibenzo-[d,g][1,3,2]dioxaphosphocin-6-yl-6-oxy)-N-methyläthylamin

Man verfährt wie in Beispiel 1, unter Verwendung von 24,47 g Phosphortrichlorid, 84,93 g 2,2'-Methylen-bis-(4,6-di-tert.-butylphenol), 7,51 g 2-(Methylamino)-äthanol und 60,72 g Triäthylamin. Das Produkt wird zweimal aus Acetonitril/Toluol umkristallisiert, was 28,36 g weissen Feststoff vom Schmelzpunkt 300-305°C ergibt.

Analyse:

Berechnet für $C_{61}H_{91}NO_5P_2$: C, 74,7; H, 9,4; N, 1,4.
Gefunden: C, 75,1; H, 9,3; N, 1,3.

Beispiel 5

N-(2,4,8,10-Tetra-tert.-butyl-12-methyl-12H-dibenzo[d,g]-[1,3,2]dioxaphosphocin-6-yl)-2'-(2,4,8,10-tetra-tert.-butyl-12-methyl-12H-dibenzo[d,g][1,3,2]dioxaphosphocin-6-yl-6-oxy)-N-methyläthylamin

Man verfährt wie in Beispiel 1, unter Verwendung von 24,47 g Phosphortrichlorid, 87,74 g 2,2'-Aethyliden-bis-(4,6-di-tert.-butylphenol), 7,51 g 2-(Methylamino)-äthanol und 60,72 g Triäthylamin. Das Produkt wird aus 2-Butanon/Toluol umkristallisiert, was einen weissen Feststoff vom Schmelzpunkt 270-277°C ergibt.

Analyse:

Berechnet für $C_{63}H_{95}NO_5P_2$: C, 75,0; H, 9,5; N, 1,4.
Gefunden: C, 75,2; H, 9,4; N, 1,4.

Beispiel 6

Verarbeitungsstabilität von Polypropylen

Grundformulierung:

| | |
|---|---|
| Polypropylen* | 100 Teile |
| Calciumstearat | 0,10 Teile |

* Profax 6801 der Hercules Chemical

Die Stabilisatoren werden als Lösung in Methylenchlorid durch Lösungsvermischung in Polypropylen eingearbeitet, und nach Entfernung des Lösungsmittels durch Verdampfen bei vermindertem Druck wird das Harz unter den folgenden Extruderbedingungen extrudiert:

| | Temperatur (°C) |
|---|---|
| Zylinder Nr. 1 | 260 |
| Zylinder Nr. 2 | 274 |
| Zylinder Nr. 3 | 288 |
| Düse Nr. 1 | 288 |
| Düse Nr. 2 | 288 |
| Düse Nr. 3 | 288 |

U.p.M. 100

Während der Extrusion wird der Extruderinnendruck mittels eines Druckwandlers bestimmt. Nach der ersten, dritten und fünften Extrusion wird das Harzgranulat jeweils bei 193°C zu 3,2 mm dicken Plättchen verpresst, an denen man den Gelbwert der Proben nach ASTM D1925-63T bestimmt. Die Ergebnisse sind in der nachfolgenden Tabelle angeführt.

Extrusionstemperatur 288°C

| | Wandlerdruck ($kg/cm^2$) nach Extrusion | | | Gelbwert nach Extrusion | | |
|---|---|---|---|---|---|---|
| Zusatzstoffe | 1 | 3 | 5 | 1 | 3 | 5 |
| Keine | 95 | 81 | 70 | 5,1 | 7,6 | 9,2 |
| 0,1% Bsp. 1 | 109 | 102 | 90 | 4,8 | 5,6 | 6,7 |
| 0,1% Bsp. 3 | 109 | 104 | 88 | 5,0 | 5,3 | 6,0 |
| 0,1% Antioxydans A* | 109 | 95 | 90 | 12,1 | 17,4 | 19,5 |
| 0,1% Antioxydans A* und 0,5% Bsp. 3 | 109 | 104 | 100 | 9,3 | 14,2 | 18,4 |

*Neopentyltetrayl-tetrakis-[3-(3',5'-di-tert.-butyl-4'-hydroxyphenyl)-propionat]

Zusammenfassend ist es ersichtlich, dass vorliegende Erfindung neuartige cyclische Phosphitverbindungen mit wirksamem Stabilisierungseffekt zur Verfügung stellt. Die Mengenverhältnisse, Arbeitsweisen und Materialien lassen sich variieren, ohne dabei von dem durch die nachfolgenden Ansprüche definierten Schutzumfang der Erfindung abzuweichen.

Patentansprüche

1. Verbindungen der Formel

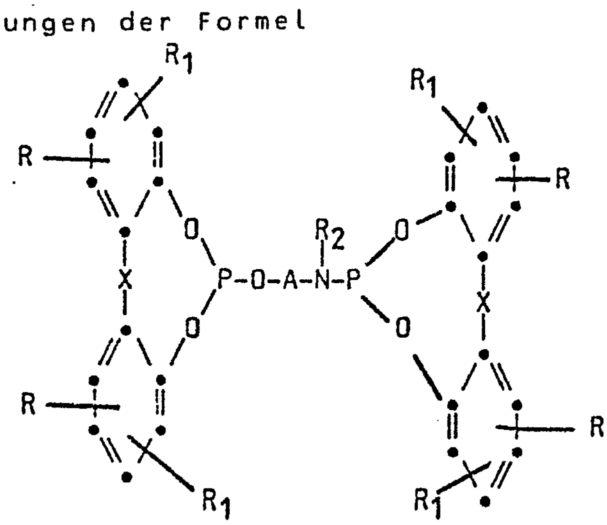

worin R und $R_1$ unabhängig voneinander für Wasserstoff, Alkyl mit 1 bis 18 Kohlenstoffatomen, Cycloalkyl mit 5 oder 6 Kohlenstoffatomen oder gegebenenfalls durch Alkyl mit 1 bis 18 Kohlenstoffatomen substituiertes Phenyl, $R_2$ für Wasserstoff, Alkyl mit 1 bis 12 Kohlenstoffatomen oder Phenyl, A für Alkylen mit 1 bis 6 Kohlenstoffatomen oder Cycloalkylen mit 5 oder 6 Kohlenstoffatomen und X für eine direkte Bindung oder Alkyliden mit 1 bis 12 Kohlenstoffatomen stehen.

2. Verbindungen nach Anspruch 1, dadurch gekennzeichnet, dass R in den Phenylringen jeweils in ortho-Stellung zum Phosphitsauerstoff steht.

3. Verbindungen nach Anspruch 2, dadurch gekennzeichnet, dass R für Alkyl mit 4 bis 8 Kohlenstoffatomen steht.

4. Verbindungen nach Anspruch 3, dadurch gekennzeichnet, dass $R_1$ für tert.-Butyl, tert.-Pentyl oder tert.-Octyl steht.

5. Verbindungen nach Anspruch 2, dadurch gekennzeichnet, dass $R_1$ für tert.-Alkyl mit 4 bis 8 Kohlenstoffatomen steht.

6. Verbindungen nach Anspruch 2, dadurch gekennzeichnet, dass X für Alkyliden der Formel

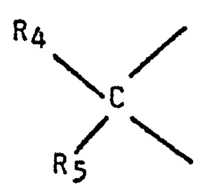

steht, worin $R_4$ und $R_5$ unabhängig voneinander Wasserstoff oder Alkyl mit 1 bis 7 Kohlenstoffatomen bedeuten, mit der

Massgabe, dass die Gesamtzahl Kohlenstoffatome 12 nicht übersteigt.

7. N-(2,4,8,10-Tetra-tert.-butyl-dibenzo[d,f][1,3,2]-dioxaphosphepin-6-yl)-2'-(2,4,8,10-tetra-tert.-butyl-dibenzo-[d,f][1,3,2]dioxaphosphepin-6-oxy)-N-methyläthylamin als Verbindung nach Anspruch 2.

8. N-(2,4,8,10-Tetra-tert.-butyl-dibenzo[d,f][1,3,2]-dioxaphosphepin-6-yl)-2'-(2,4,8,10-tetra-tert.-butyl-dibenzo[d,f][1,3,2]dioxaphosphepin-6-oxy)-N-äthyläthylamin als Verbindung nach Anspruch 2.

9. N-(2,4,8,10-Tetra-tert.-butyl-dibenzo[d,f][1,3,2]-dioxaphosphepin-6-yl)-2'-(2,4,8,10-tetra-tert.-butyl-dibenzo[d,f][1,3,2]dioxaphosphepin-6-yl-6-oxy)-N-butyläthylamin als Verbindung nach Anspruch 2.

10. N-(2,4,8,10-Tetra-tert.-butyl-12H-dibenzo[d,g][1,3,2]-dioxaphosphocin-6-yl)-2'-(2,4,8,10-tetra-tert.-butyl-12H-dibenzo[d,g][1,3,2]dioxaphosphocin-6-yl-6-oxy)-N-methyläthylamin als Verbindung nach Anspruch 2.

11. N-(2,4,8,10-Tetra-tert.-butyl-12-methyl-12H-dibenzo-[d,g][1,3,2]dioxaphosphocin-6-yl)-2'-(2,4,8,10-tetra-tert.-butyl-12-methyl-12H-dibenzo[d,g][1,3,2]dioxaphosphocin-6-yl-6-oxy)-N-methyläthylamin als Verbindung nach Anspruch 2.

12. Stoffzusammensetzungen, dadurch gekennzeichnet, dass sie aus einem organischen Material bestehen, das oxydativem, thermischem und aktinischem Abbau unterliegt und mit einer wirksamen stabilisierenden Menge einer Verbindung nach Anspruch 1 stabilisiert ist.

13. Zusammensetzungen nach Anspruch 12, dadurch gekennzeichnet, dass als organisches Material ein synthetisches Polymer vorliegt.

14. Zusammensetzungen nach Anspruch 13, dadurch gekennzeichnet, dass als solches synthetisches Polymer ein Polyolefinhomopolymer oder -copolymer vorliegt.

15. Zusammensetzungen nach Anspruch 14, dadurch gekennzeichnet, dass dieses Polyolefin aus der Polyäthylen, Polypropylen, Polyisobutylen, Poly-(buten-1), Poly-(penten-1), Poly-(3-methylbuten-1) und Poly-(4-methylpenten-1) umfassenden Gruppe ausgewählt ist.

16. Zusammensetzungen nach Anspruch 12, dadurch gekennzeichnet, dass sie ferner ein aus der 2,6-Di-tert.-butyl-4-methylphenol, 4,4'-Thio-bis-(6-tert.-butyl-3-methylphenol), 2,2'-Methylen-bis-(6-tert.-butyl-3-methylphenol), 4,4'-Methylen-bis-(2,6-di-tert.-butylphenol), 1,1,3-Tris-(5-tert.-butyl-4-hydroxy-2-methylphenyl)-butan, 1,1,3-Tris-(3,5-di-tert.-butyl-4-hydroxybenzyl)-2,4,6-trimethylbenzol, 2-Octylthio-4,6-bis-(3,5-di-tert.-butyl-4-hydroxyanilino)-s-triazin, n-Octadecyl-3,5-di-tert.-butyl-4-hydroxyhydrocinnamat, Neopentantetrayl - tetrakis-(3,5-di-tert.-butyl-4-hydroxyhydrocinnamat), 1,3,5-Tris-(3,5-di-tert.-butyl-4-hydroxybenzyl)-isocyanurat, Thiodiäthylen-bis-(3,5-di-tert.-butyl-4-hydroxyhydrocinnamat und den Tris-(2-hydroxyäthyl)-isocyanuratester der β-(3,4-Di-tert.-butyl-4-hydroxyphenyl)-propionsäure umfassenden Gruppe ausgewähltes phenolisches Antioxydans enthalten.

17. Zusammensetzungen nach Anspruch 12, dadurch gekennzeichnet, dass sie ferner ein aus der 2-(2'-Hydroxy-5'-methylphenyl)-benztriazol, 2-(3',5'-Di-tert.-butyl-2'-hydroxyphenyl)-benztriazol, 2-(2'-Hydroxy-3',5'-di-tert.-amylphenyl)-benztriazol, Nickel-bis-[O-äthyl-(3,5-di-tert.-butyl-4-hydroxybenzyl)-phosphonat], Bis-(1,2,2,6,6-Pentamethyl-4-piperidyl)-2-n-butyl-2-(3,5-di-tert.-butyl-4-hydroxybenzyl)-malonat, Bis-(2,2,6,6-Tetramethyl-4-piperidyl)-sebacinat, das Bernsteinsäuredimethylesterpolymer mit 4-Hydroxy-2,2,6,6-tetramethyl-1-piperidinäthanol und das Polymer des 2,4-Dichlor-6-octylamino-s-triazins mit N'-(2,2,6,6-Tetramethyl-4-piperidyl)-hexamethylendiamin umfassenden Gruppe ausgewähltes Lichtschutzmittel enthalten.

18. Zusammensetzungen nach Anspruch 16, dadurch gekennzeichnet, dass sie ferner ein aus der 2-(2'-Hydroxy-5'-methylphenyl)-benztriazol, 2-(3',5'-Di-tert.-butyl-2'-hydroxyphenyl)-benztriazol, 2-(2'-Hydroxy-3,5'-di-tert.-amylphenyl)-benztriazol, Nickel-bis-[O-äthyl-(3,5-di-tert.-butyl-4-hydroxybenzyl)-phosphonat], Bis-(1,2,2,6,6-Pentamethyl-4-piperidyl)-2-n-butyl-2-(3,5-di-tert.-butyl-4-hydroxybenzyl)-malonat, Bis-(2,2,6,6-Tetramethyl-4-piperidyl)-sebacinat, das Bernsteinsäuredimethylesterpolymer mit 4-Hydroxy-2,2,6,6-tetramethyl-1-piperidinäthanol und das Polymer des 2,4-Dichlor-6-octylamino-s-triazins mit N'-(2,2,6,6-Tetramethyl-4-piperidyl)-hexamethylendiamin umfassenden Gruppe ausgewähltes Lichtschutzmittel enthalten.

19. Verfahren zum Stabilisieren organischer Materialien gegen oxydativen, thermischen und aktinischen Abbau, dadurch gekennzeichnet, dass man eine wirksame stabilisierende Menge einer Verbindung nach Anspruch 1 in dieses organische Material einarbeitet.

0108714

Europäisches Patentamt

## EUROPÄISCHER RECHERCHENBERICHT

Nummer der Anmeldung

EP 83 81 0463

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
| A | EP-A-0 002 821 (CIBA-GEIGY AG)<br>* Ansprüche 1,7-9 *<br>--- | 1,13,<br>14,19 | C 07 F 9/24<br>C 08 K 5/51<br>C 10 M 1/44 |
| A | EP-A-0 005 500 (CIBA-GEIGY AG)<br>* Ansprüche 1,6-8 *<br>--- | 1,13,<br>14,19 | |
| A | EP-A-0 020 297 (CIBA-GEIGY AG)<br>* Ansprüche 1,11,12 *<br>----- | 1,13,<br>14,19 | |
| | | | RECHERCHIERTE SACHGEBIETE (Int. Cl. 3) |
| | | | C 07 F<br>C 08 K |

Der vorliegende Recherchenbericht wurde für alle Patentansprüche erstellt.

| Recherchenort | Abschlußdatum der Recherche | Prüfer |
|---|---|---|
| DEN HAAG | 23-01-1984 | HOFFMANN K.W. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82